# EUROPEAN PATENT APPLICATION

(11) **EP 4 803 367 A1**
(43) Date of publication of application: **09.09.2026**
(21) Application number: 26162626.1
(22) Date of filing: 05.03.2026
(51) Int. Cl.: B60N 2/75

(54) **AN AUTOMOBILE SEAT WITH A HIDDEN ARMREST**

(30) Priority: 05.03.2025 CN 202510256006; 05.03.2025 CN 202520379925 U
(71) Applicant: Adient (Chongqing) Automotive Components Co., Ltd., Liangjiang New Area, Chongqing 401122 (CN)
(72) Inventor: ZHANG, Zhishen, Chongqing, Liangjiang New Area, 401122 (CN); LIN, Bijun, Chongqing, Liangjiang New Area, 401122 (CN); DENG, Xinyuan, Chongqing, Liangjiang New Area, 401122 (CN); TAN, Muxing, Chongqing, Liangjiang New Area, 401122 (CN); LI, Yajun, Chongqing, Liangjiang New Area, 401122 (CN); JIA, Wei, Chongqing, Liangjiang New Area, 401122 (CN); LI, Qingmao, Chongqing, Liangjiang New Area, 401122 (CN); FAN, Jiang, Chongqing, Liangjiang New Area, 401122 (CN); XIN, Yi, Chongqing, Liangjiang New Area, 401122 (CN)
(74) Representative: Liedtke & Partner Patentanwälte

(57) **Abstract**

The present invention discloses an automobile seat with a hidden armrest, comprising a backrest (A), a mounting base (1) is provided in the middle of the backrest (A), an armrest mechanism (B) is provided on the mounting base (1), the armrest mechanism (B) comprises a transmission rod (3), an armrest (4) fixedly connected to an outer end of the transmission rod (3), and a turntable (2) rotatably mounted on the transmission rod (3), the turntable (2) is provided with an installation through hole (2a), the transmission rod (3) is axially slidably inserted through the installation through hole (2a) of the turntable (2), and a limiting component (5) for enabling the transmission rod (3) to rotate in sync with the turntable (2) is provided between the turntable (2) and the transmission rod (3); The armrest mechanism (B) further comprises a first power component (6) and a second power component (7), the first power component (6) is used to drive telescopic movement of the armrest (4), and the second power component (7) is used to drive rotational movement of the armrest (4); A storage groove (C) is provided on a side portion of the backrest (A), and the first power component (6) drives the armrest (4) to telescopically move inward and outward to enable the armrest (4) to switch between being stored in the storage groove (C) and extending out of the storage groove (C). The beneficial effects of the present invention are: step-by-step adjustment of armrest (4) unfolding and angle rotation is realized, and storage compactness is improved.

## Description

### Technical field

The present invention relates to the technical field of automobile parts, and in particular to an automobile seat with a hidden armrest.

### Background art

With the improvement of people's standards of living, consumers' requirements for the quality of automobile interiors and the comfort of riding are getting higher and higher, and in order to meet consumers' diversified needs, more and more vehicle models are starting to be equipped with seat armrests to improve riding comfort. Traditional automobile seat armrests are mainly of two forms: one form is being located on a side portion of the seat backrest and being able to be manually turned forward to unfold, and the other form is being fixed on two sides of the seat. These two traditional forms have single functions, are not convenient to use, and take space up in the vehicle when not in use.

In order to meet the increasingly changeable in-vehicle application environment requirements at present, hidden seat armrests have appeared on the market, that is, the armrest can be stored in a side portion of the seat and can be unfolded for use. Although the hidden seat armrest reduces the space it takes up on two sides of the seat when not in use, at present most of them only have two adjustable states, i.e., an extended state and a folded state, and are not sufficiently intelligent, and cannot adapt to the use needs of different passengers. In addition, the adjustment mode of most armrests is a compound movement, the telescopic movement and the rotational movement of the armrest being made at the same time, which, in one aspect, does not allow the armrest to rotate independently for a large-angle swing, and in another aspect, sweeps a large space when the armrest swings, and there is still room for optimizing the compactness of the seat after folding.

### Summary of the invention

In view of this, the present invention provides an automobile seat with a hidden armrest, which can realize step-by-step adjustments for armrest unfolding and angle rotation, which is beneficial for electrified control and improving the compactness when stowed away.

In order to achieve the above purpose, the technical solution of the present invention is as follows:
An automobile seat with a hidden, e.g. stowable, concealable or rectractable, armrest comprises a backrest, a mounting base is provided in the middle of the backrest, an armrest mechanism is provided on the mounting base, the armrest mechanism comprises a transmission rod extending along a width direction of the backrest, an armrest fixedly connected to an outer end of the transmission rod, and a turntable rotatably mounted on the transmission rod, the turntable is provided with an installation through hole, the transmission rod is axially slidably inserted through the installation through hole of the turntable, a limiting component is provided between the turntable and the transmission rod, and the limiting component is used to enable the transmission rod to rotate in sync with the turntable;

The armrest mechanism further comprises a first power component and a second power component, the first power component is used to drive the transmission rod to move back and forth along an axial direction of the turntable, so as to drive the armrest to extend and retract, and the second power component is used to drive the turntable to rotate, so as to drive the armrest to rotate;

A storage groove is provided on a side portion of the backrest, and the first power component drives the armrest to telescopically move inward and outward, so as to enable the armrest to switch between being stored in the storage groove and extending out of the storage groove.

By adopting the above structure, the armrest can be stowed away in a side portion of the seat, and the shape of the storage groove is adapted to the shape of the armrest, and the stowed away form is compact. The telescopic movement and the rotational movement of the armrest are performed independently, so that step-by-step adjustments of armrest unfolding and angle rotation can be realized, multiple adjustable states are available for flexible use, and user needs of different passengers can be met.

Preferably: the limiting component comprises an anti-rotation strip fixed on an outer side of the transmission rod along an axial direction, an anti-rotation groove adapted to the anti-rotation strip is formed in a side wall of the installation through hole, and the anti-rotation strip is in sliding fit with the anti-rotation groove. By adopting the above structure, the structure is simple, and the transmission rod and the turntable synchronously rotate, so as to drive the armrest to rotate.

Preferably: the elongated groove is formed in a side wall of the transmission rod along an axial direction, and the anti-rotation strip is fixedly mounted in the elongated groove. By adopting the above structure, installation is convenient and the structure is stable.

Preferably: the mounting base comprises a backrest cross beam and a backrest side plate, the transmission rod is reciprocally movably mounted on the backrest cross beam, and the turntable is rotatably mounted on the backrest side plate. By adopting the above structure, the structure is compact and installation is convenient.

Preferably: the first power component comprises a first motor fixed on the backrest cross beam, a lead screw driven by the first motor, and a threaded fitting in threaded fit with the lead screw, the lead screw is rotatably arranged on the backrest cross beam, the transmission rod is of a hollow structure and is sleeved on the lead screw with a clearance, and the threaded fitting is mounted inside the transmission rod. By adopting the above structure, power is transmitted.

Preferably: a side wall of the threaded fitting is provided with a guide structure protruding outward along a radial direction thereof, the backrest cross beam is formed with a limiting groove along an axial direction of the lead screw, and the guide structure is slidably placed in the limiting groove. By adopting the above structure, rotation of the threaded fitting is limited.

Preferably: an inner end side wall of the transmission rod is formed with an arc-shaped groove along a circumferential direction thereof, and the guide structure is further slidably placed in the arc-shaped groove. By adopting the above structure, the transmission rod moves along an axial direction in sync with the threaded fitting, and the transmission rod can also rotate independently.

Preferably: the second power component comprises a second motor fixed on the backrest side plate, an output shaft of the second motor is connected with a gear, an outer side of the turntable is provided with a toothed portion engaging the gear, and the turntable is in power coupling with the gear. By adopting the above structure, the turntable is rotated through gear transmission, so as to drive the armrest to rotate.

Preferably: the inner end of the anti-rotation strip is provided with a first limiting portion protruding outward, and an outer end side wall of the transmission rod is provided with a second limiting portion protruding outward. By adopting the above structure, the telescopic position of the armrest is limited.

Preferably: one armrest mechanism each is provided on left and right sides of the mounting base, lead screws of the two armrest mechanisms are driven by one first motor, the first motor connects the two lead screws through a synchronizing rod, and rotation directions of the two lead screws are opposite to each other. By adopting the above structure, the structure is compact and saves space, synchronous telescopic extension and retraction of the armrests on both sides can be realized through driving by one first motor, adjustment is convenient, and riding comfort is improved.

Compared with the prior art, the beneficial effects of the present invention are:
1. By adopting the automobile seat with a hidden armrest provided by the present invention, a side portion of the automobile seat has a storage groove adapted to the shape of the armrest, the armrest can be stowed away in the storage groove, and the overall storage form is simple and compact.
2. The telescopic movement and the rotational movement of the seat armrest are performed independently, armrest extension and angle rotation can be adjusted step by step to enable flexible use, diversified user needs of passengers are met, and riding comfort is improved.
3. Rotation directions of the lead screws of the armrest mechanisms on the left and right sides are opposite to each other, synchronous telescopic extension and retraction of the armrests on both sides can be realized through driving by one motor, synchronization is good, installation and adjustment are convenient, and space is saved.

### Description of the drawings

- FIG. 1: is a side view of a seat;
- FIG. 2: is a schematic diagram of an internal structure of the seat backrest A;
- FIG. 3: is a schematic diagram of a structure of the mounting base 1;
- FIG. 4: is a schematic diagram of a structure of the armrest mechanism B;
- FIG. 5: is a schematic diagram of transmission of the lead screw 62;
- FIG. 6: is a schematic diagram of a structure of the armrest 4 in a folded state;
- FIG. 7: is a schematic diagram of the armrest 4 unfolded to its limit;
- FIG. 8: is a schematic diagram showing the limiting groove 11a;
- FIG. 9: is a schematic diagram showing a connection method of the two lead screws 62; and
- FIG. 10: is a schematic diagram of the armrest 4 located in the storage groove C.

### Specific embodiments

The present invention is further described below in conjunction with embodiments and drawings.

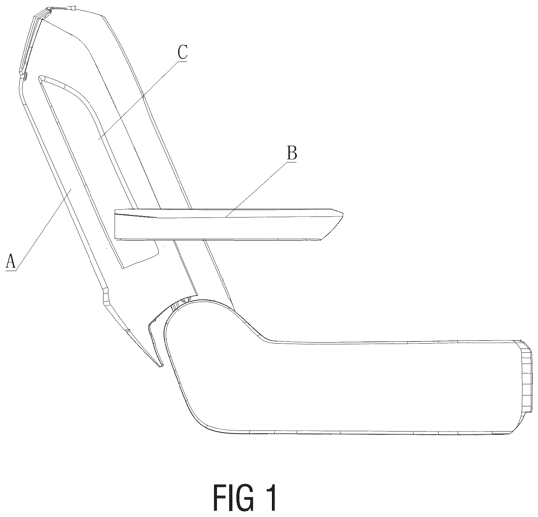

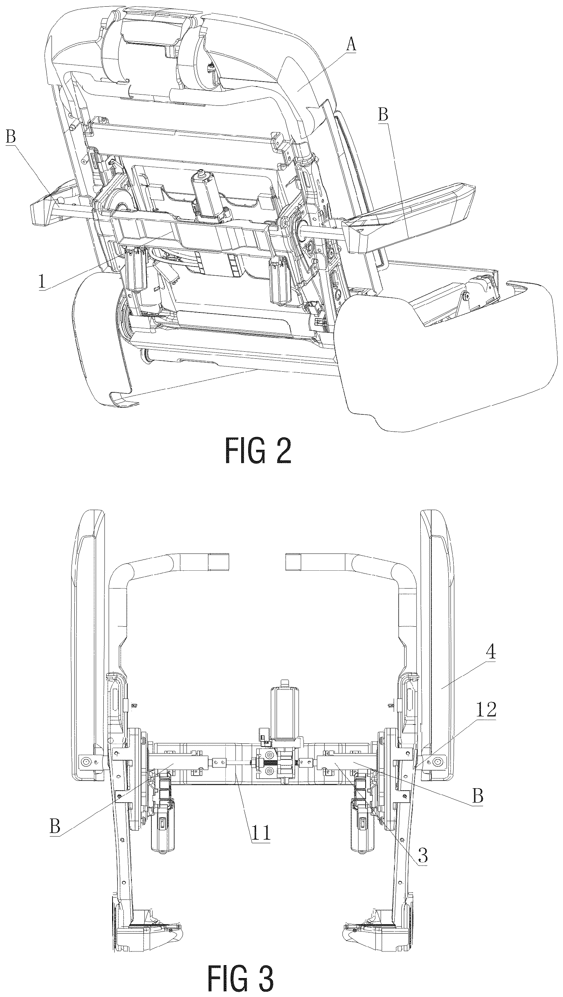

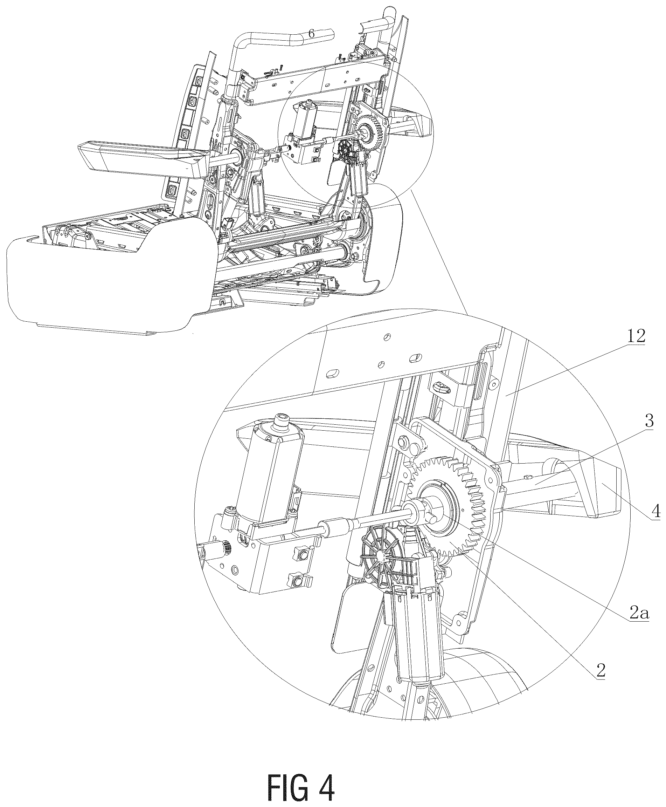

As shown in FIG. 1 and FIG. 2, an automobile seat with a hidden armrest comprises a backrest A, a mounting base 1 is provided in the middle of the backrest A, and an armrest mechanism B is respectively provided on left and right sides of the mounting base 1. As shown in FIG. 3, the mounting base 1 comprises a backrest cross beam 11 and a backrest side plate 12 perpendicular to the backrest cross beam 11, and the backrest cross beam 11 extends along a width direction of the backrest A. As shown in FIG. 4, the armrest mechanism B comprises a transmission rod 3 reciprocally movably mounted on the backrest cross beam 11, an armrest 4 fixedly connected to an outer end of the transmission rod 3, and a turntable 2 rotatably mounted on the transmission rod 3, wherein an installation through hole 2a is formed in a middle position of the turntable 2, and the transmission rod 3 is axially slidably inserted through the installation through hole 2a.

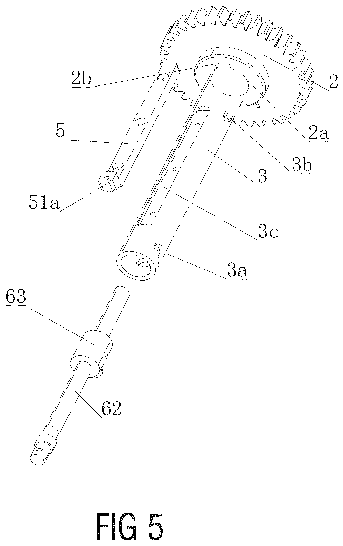

As shown in FIG. 5, a limiting component 5 for enabling the transmission rod 3 to rotate in sync with the turntable 2 is provided between the turntable 2 and the transmission rod 3, an elongated groove 3c is formed in a side wall of the transmission rod 3 along an axial direction, the limiting component 5 comprises an anti-rotation strip 51 arranged on an outer side of the transmission rod along an axial direction, the lower end of the anti-rotation strip 51 is fixedly mounted in the elongated groove 3c, an anti-rotation slot 2b adapted to the anti-rotation strip 51 is formed in a side wall of the installation through hole 2a, and the anti-rotation strip 51 is in sliding fit with the anti-rotation slot 2b.

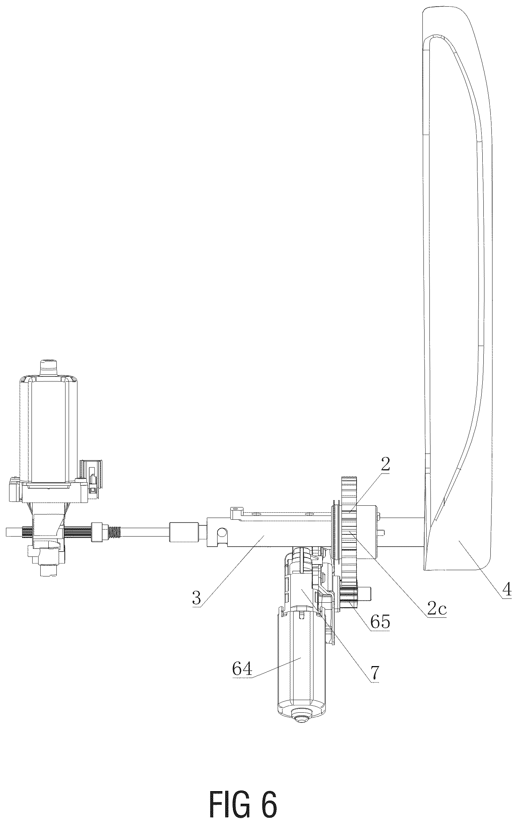

As shown in FIG. 6, the armrest mechanism B further comprises a second power component 7, the second power component 7 comprises a second motor 64 fixed on the backrest side plate 12, an output shaft of the second motor 64 is connected with a gear 65, the outer side of the turntable 2 is provided with a toothed portion 2c engaging the gear 65, the turntable 2 is in power coupling with the gear 65 through the toothed portion 2c, the second motor 64 drives the gear 65 to rotate, and the transmission rod 3 rotates under transmission of the turntable 2, so as to drive the armrest 4 to rotate.

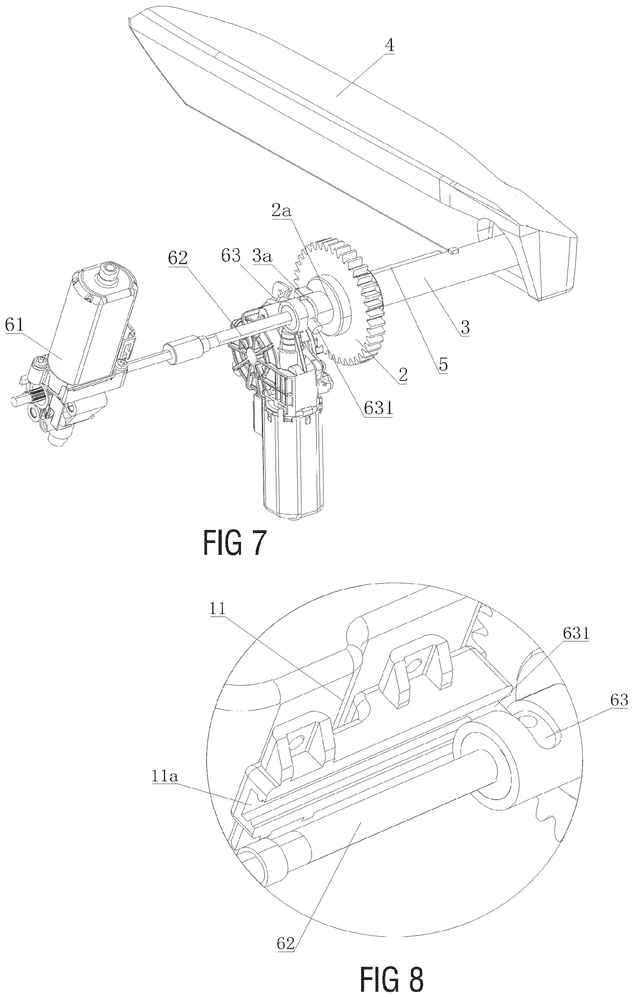

As shown in FIG. 5 and FIG. 7, the armrest mechanism B further comprises a first power component 6, the first power component 6 comprises a first motor 61 fixed on the backrest cross beam 11, a lead screw 62 driven by the first motor 61, and a threaded fitting 63 in threaded fit with the lead screw 62, and the lead screw 62 is rotatably arranged on the backrest cross beam 11. The transmission rod 3 is of a hollow structure and is sleeved on the lead screw 62 with a clearance, and the threaded fitting 63 is mounted inside the transmission rod 3. A side wall of the threaded fitting 63 is provided with a guide structure 631 protruding outward along a radial direction thereof, an inner end side wall of the transmission rod 3 is formed with an arc-shaped groove 3a along a circumferential direction thereof, and the guide structure 631 is slidably placed in the arc-shaped groove 3a. The transmission rod 3 can rotate relative to the threaded fitting 63, and a rotation angle between the two is defined by the movable range of the guide structure 631 in the arc-shaped groove 3a. As shown in FIG. 8, the backrest cross beam 11 is formed with a limiting groove 11a along an axial direction of the lead screw 62, the guide structure 631 passes through the arc-shaped groove 3a with its end further slidably placed in the limiting groove 11a. The first motor 61 drives the lead screw 62 to rotate, the threaded fitting 63 is limited by the limiting groove 11a to move along an axial direction of the lead screw 62, and the transmission rod 3 slides in sync with the threaded fitting 63, so as to drive the armrest 4 to extend and retract.

As shown in FIG. 5, in the present embodiment, the inner end of the anti-rotation strip 51 is provided with a first limiting portion 51a protruding outward, an outer end side wall of the transmission rod 3 is provided with a second limiting portion 3b protruding outward, the first limiting portion 51a and the second limiting portion 3b are both rectangular, and during sliding of the transmission rod 3, the turntable 2 cooperates with the first limiting portion 51a and the second limiting portion 3b to limit extreme positions of inner and outer ends of the armrest 4, that is, to define the stroke of telescopic movement of the armrest 4.

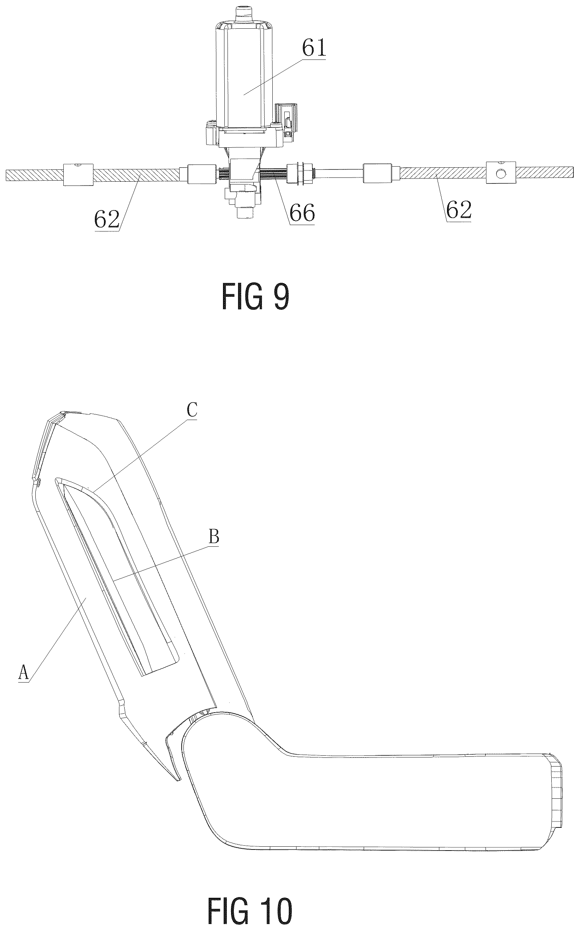

As shown in FIG. 3 and FIG. 9, one armrest mechanism B is respectively provided on left and right sides of the mounting base 1, the lead screws 62 of the two armrest mechanisms B are driven by one first motor 61, the first motor 61 connects the two lead screws 62 through the synchronizing rod 66, thread directions of the two lead screws 62 are opposite to each other so that synchronous extension and retraction can be realized, that is, installation space inside the seat backrest A is saved, and synchronization of extension and retraction of the armrests 4 on both sides can be ensured, and riding comfort of passengers is improved. As shown in FIG. 1 and FIG. 10, a storage groove C is provided on a side portion of the seat backrest A, the armrest 4 can be stowed away in a side portion of the seat, and the shape of the storage groove C is adapted to the shape of the armrest 4 to achieve a compact storage form.

As shown in FIG. 7, the working principle of the unfolding process of the armrest 4 is as follows: The first motor 61 drives the lead screw 62 to rotate, the threaded fitting 63 moves outward along the lead screw under the limiting effect of the limiting groove 11a, and the transmission rod 3 moves in sync with the threaded fitting 63 under the limiting effect of the groove width of the arc-shaped groove 3a to drive the armrest 4 to extend outward, and during this process, the anti-rotation strip 51 cooperates with the anti-rotation slot 2b, and when the turntable 2 does not rotate, the transmission rod 3 cannot rotate, an extreme position of outward extension of the armrest 4 is a position where the first limiting portion 51a abuts against the side face of the turntable 2, and within this range, the armrest 4 can stop at any position. After the armrest 4 extends outward, the second motor 64 drives the gear 65 to rotate, the gear 65 engages the toothed portion 2c on the outer side of the turntable 2 to drive the turntable 2 to rotate, and the transmission rod 3 synchronously rotates following the turntable 2 to drive the armrest 4 to rotate, during this process, the transmission rod 3 rotates relative to the threaded fitting 63, the guide structure 631 slides relative to the arc-shaped groove 3a, an extreme position of rotation of the armrest 4 corresponds to a length of the arc-shaped groove 3a, when the guide structure 631 is located at end positions at two ends of the arc-shaped groove 3a, the armrest 4 is in two extreme positions, and within the range between the two extreme positions, the armrest 4 can be maintained at any position.

As shown in FIG. 6, the working principle of the folding process of the armrest 4 is as follows: The second motor 64 drives the gear 65 to rotate, the turntable 2 rotates under transmission of the gear 65, the transmission rod 3 synchronously rotates following the turntable 2 under limitation of the limiting component 5 to drive the armrest 4 to rotate, and after the guide structure 631 relatively slides to an end position of the arc-shaped groove 3a, the first motor drives the lead screw 62 to drive the lead screw 62 to rotate back, the transmission rod 3 moves inward under the guiding and limiting of the limiting groove 11a and the arc-shaped groove 3a, and when the second limiting portion 3b abuts against the side face of the turntable 2, the armrest 4 is precisely stowed away in the storage groove C.

In the present embodiment, after the armrest 4 unfolds outward and leaves the storage groove C, the rotational movement and the telescopic movement of the armrest 4 do not interfere with each other, step-by-step adjustment of outward unfolding and angle rotation of the armrest 4 can be realized, that is, the armrest 4 can first unfold outward and then turn forward, or first turn forward and then unfold outward, or synchronously does the two movements to remain at any position within a certain range. The design is beneficial to electrified control and provides multiple adjustable states for flexible use and for meeting different user needs.

Finally, it should be noted that only preferred embodiments of the present invention are described in the above, and a person of ordinary skill in the art, under the inspiration of the present invention, can make various similar representations without violating the purpose and claims of the present patent application, and such variations all fall within the protection scope of the present patent application.

### List of References

- 1: mounting base
- 2: turntable
- 2a: hole
- 2b: anti-rotation slot
- 2c: toothed portion
- 3: transmission rod
- 3a: arc-shaped groove
- 3b: second limiting portion
- 3c: elongated groove
- 4: armrest
- 5: limiting component
- 6: first power component
- 7: second power component
- 11: backrest cross beam
- 11a: limiting groove
- 12: backrest side plate
- 51: anti-rotation strip
- 51a: first limiting portion
- 61: first motor
- 62: lead screw
- 63: threaded fitting
- 64: second motor
- 65: gear
- 66: synchronizing rod
- 631: guide structure

- A: backrest
- B: armrest mechanism
- C: storage groove

## Claims

1. Automobile seat comprising:
- a backrest (A),
- an armrest (4),
- a mounting base (1), provided in the middle of the backrest (A),
- an armrest mechanism (B), provided on the mounting base (1),
wherein the armrest mechanism (B) comprises a transmission rod (3) extending along a width direction of the backrest (A), the armrest (4) is fixedly connected to an outer end of the transmission rod (3), and a turntable (2) is rotatably mounted on the transmission rod (3), the turntable (2) is provided with an installation through hole (2a), the transmission rod (3) is axially slidably inserted through the installation through hole (2a) of the turntable (2), a limiting component (5) is provided between the turntable (2) and the transmission rod (3), and the limiting component (5) is used to enable the transmission rod (3) to rotate in sync with the turntable (2);
wherein the armrest mechanism (B) further comprises a first power component (6) and a second power component (7), the first power component (6) is used to drive the transmission rod (3) to move back and forth along an axial direction of the turntable (2), so as to drive the armrest (4) to extend and retract, and the second power component (7) is used to drive the turntable (2) to rotate, so as to drive the armrest (4) to rotate;
a storage groove (C) is provided on a side portion of the backrest (A), and the first power component (6) drives the armrest (4) to telescopically move inward and outward, so as to enable the armrest (4) to switch between being stored in the storage groove (C) and extending out of the storage groove (C).

2. Automobile seat according to claim 1, **characterised in that**: the limiting component (5) comprises an anti-rotation strip (51) fixed on an outer side of the transmission rod (3) along an axial direction, an anti-rotation slot (2b) adapted to the anti-rotation strip (51) is formed in a side wall of the installation through hole (2a), and the anti-rotation strip (51) is in sliding fit with the anti-rotation slot (2b).

3. Automobile seat according to claim 2, **characterised in that**: an elongated groove (3c) is formed in a side wall of the transmission rod (3) along an axial direction, and the anti-rotation strip (51) is fixedly mounted in the elongated groove (3c).

4. Automobile seat according to anyone of the preceding claims, **characterised in that**: the mounting base (1) comprises a backrest cross beam (11) and a backrest side plate (12), the transmission rod (3) is reciprocally movable mounted on the backrest cross beam (11), and the turntable (2) is rotatably mounted on the backrest side plate (12).

5. Automobile seat according to claim 4, **characterised in that**: the first power component (6) comprises a first motor (61) fixed on the backrest cross beam (11), a lead screw (62) driven by the first motor (61), and a threaded fitting (63) in threaded fit with the lead screw (62), the lead screw (62) is rotatably arranged on the backrest cross beam (11), the transmission rod (3) is of a hollow structure and is sleeved on the lead screw (62) with a clearance, and the threaded fitting (63) is mounted inside the transmission rod (3).

6. Automobile seat according to claim 5, **characterised in that**: a side wall of the threaded fitting (63) is provided with a guide structure (631) protruding outward along a radial direction thereof, the backrest cross beam (11) is formed with a limiting groove (11a) along an axial direction of the lead screw (62), and the guide structure (631) is slidably placed in the limiting groove (11a).

7. Automobile seat according to claim 6, **characterised in that**: an inner end side wall of the transmission rod (3) is formed with an arc-shaped groove (3a) along a circumferential direction thereof, and the guide structure (631) is further slidably placed in the arc-shaped groove (3a).

8. Automobile seat according to anyone of the preceding claims 4 to 7, **characterised in that**: the second power component (7) comprises a second motor (64) fixed on the backrest side plate (12), an output shaft of the second motor (64) is connected with a gear (65), an outer side of the turntable (2) is provided with a toothed portion (2c) to engage the gear (65), and the turntable (2) is in power coupling with the gear (65).

9. Automobile seat according to anyone of the preceding claims 2 to 8, **characterised in that**: an inner end of the anti-rotation strip (51) is provided with a first limiting portion (51a) protruding outward, and an outer end side wall of the transmission rod (3) is provided with a second limiting portion (3b) protruding outward.

10. Automobile seat according to anyone of the preceding claims 5 to 9, **characterised in that**: one armrest mechanism (B) is respectively provided on left and right sides of the mounting base (1), the lead screws (62) of the two armrest mechanisms (B) are driven by one first motor (61), the first motor (61) connects the two lead screws (62) through a synchronizing rod (66), and rotation directions of the two lead screws (62) are opposite to each other.
